# FASCICULE DE BREVET EUROPEEN

(11) **EP 3 946 976 B1**
(45) Date de publication et mention de la délivrance du brevet: **01.05.2024**
(21) Numéro de dépôt: 20713014.7
(22) Date de dépôt: 26.03.2020
(51) Int. Cl.: B60C 11/03, B60C 11/11, B60C 9/20

(54) **PNEUMATIQUE POUR VÉHICULE AGRICOLE COMPRENANT UNE BANDE DE ROULEMENT AMELIORÉE**
REIFEN FÜR LANDWIRTSCHAFTLICHES FAHRZEUG MIT VERBESSERTER LAUFFLÄCHE
TIRE FOR AGRICULTURAL VEHICLE COMPRISING AN IMPROVED TREAD

(30) Priorité: 29.03.2019 FR 1903318
(43) Date de publication de la demande: 09.02.2022
(73) Titulaire: COMPAGNIE GENERALE DES ETABLISSEMENTS MICHELIN, 63000 Clermont-Ferrand (FR)
(72) Inventeur: PERRIN, Frédéric, 63040 Clermont-Ferrand Cedex 9 (FR); LACHAL, Florian, 63040 Clermont-Ferrand Cedex 9 (FR); VACHERAND, Jean-Michel, 63040 Clermont-Ferrand Cedex 9 (FR)
(74) Mandataire: M.F.P. Michelin
(86) Numéro de dépôt international: PCT/EP2020/058604
(87) Numéro de publication internationale: WO 2020/201028

(56) Documents cités:
- EP-A1- 3 210 798
- FR-A2- 2 237 771
- US-A- 3 559 714
- US-A1- 2013 340 906
- US-B1- 6 263 933

## Description

La présente invention a pour objet un pneumatique pour véhicule agricole, tel qu'un tracteur agricole ou un véhicule agro-industriel, et concerne plus particulièrement sa bande de roulement.

Les spécifications dimensionnelles et les conditions d'usage (charge, vitesse, pression) d'un pneumatique pour véhicule agricole sont définies dans des normes, telles que, par exemple, la norme ETRTO (European Tyre and Rim Technical Organisation). A titre d'exemple, un pneumatique radial pour roue motrice d'un tracteur agricole est destiné à être monté sur une jante dont le diamètre est généralement compris entre 16 pouces et 46 pouces, voire 54 pouces. Il est destiné à rouler sur un tracteur agricole dont la puissance est comprise entre 50 CV et plus de 250 CV (jusqu'à 550 CV) et pouvant rouler jusqu'à 65 km/h. Pour ce type de pneumatique, la pression de gonflage minimale recommandée correspondant à la capacité de charge indiquée est le plus souvent au plus égale à 400 kPa, mais peut descendre jusqu'à 240 kPa, pour un pneumatique IF (Improved Flexion), voire 160 kPa, pour un pneumatique VF (Very High Flexion).

Comme tout pneumatique, un pneumatique pour véhicule agricole comprend une bande de roulement, destinée à venir en contact avec un sol par l'intermédiaire d'une surface de roulement - surface de contact sur un sol rigide - et dont les deux extrémités axiales sont reliées par l'intermédiaire de deux flancs à deux bourrelets assurant la liaison mécanique entre le pneumatique et la jante sur laquelle il est destiné à être monté.

Dans ce qui suit, les directions circonférentielle, axiale et radiale désignent respectivement une direction tangente à la surface de roulement et orientée selon le sens de rotation du pneumatique, une direction parallèle à l'axe de rotation du pneumatique et une direction perpendiculaire à l'axe de rotation du pneumatique. Un plan méridien ou radial est défini par une direction radiale et la direction axiale, et contient l'axe de rotation du pneumatique. Un plan circonférentiel est défini par une direction radiale et une direction circonférentielle, et est donc perpendiculaire à l'axe de rotation du pneumatique. Le plan circonférentiel passant par le milieu de la bande de roulement est appelé plan équatorial.

La bande de roulement d'un pneumatique pour véhicule agricole comprend généralement des éléments en relief, appelés éléments de sculpture, s'étendant radialement vers l'extérieur à partir d'une surface portante jusqu'à la surface de roulement, et séparés les uns des autres par des creux De tels pneumatiques sont décrits dans US6263933 B1, EP3210798 A1 et US2013/340906 A1.

La proportion de creux est usuellement quantifiée par un taux d'entaillement volumique TEV, défini comme le ratio entre le volume de creux VC et le volume total de la bande de roulement supposée sans creux V, le volume total étant le volume géométrique délimité par la surface portante et par la surface de roulement. La surface de roulement variant avec l'usure de la bande de roulement, le taux d'entaillement volumique TEV est généralement, mais pas obligatoirement, variable avec le niveau d'usure. Ainsi, le taux d'entaillement volumique TEV peut être défini pour un état neuf ou pour un état d'usure donné. A titre d'exemple, un pneumatique pour roue motrice de tracteur agricole à l'état neuf a un taux d'entaillement volumique TEV généralement au moins égal à 50% et souvent au moins égal à 60%.

On peut également définir un taux d'entaillement volumique local TEVL pour toute portion de bande de roulement, s'étendant circonférentiellement sur toute la circonférence du pneumatique et s'étendant axialement à partir d'un premier plan circonférentiel jusqu'à un deuxième plan circonférentiel, la distance entre ces deux plans circonférentiels définissant la largeur axiale de la portion de bande de roulement. Le taux d'entaillement volumique local TEVL est défini comme le ratio entre le volume de creux VCL et le volume total VL de la portion de bande de roulement supposée sans creux, correspondant au volume géométrique délimité par la surface portante, la surface de roulement et les deux plans circonférentiels. Comme le taux d'entaillement volumique TEV, le taux d'entaillement volumique local TEVL peut être défini pour un état neuf ou pour un état d'usure donné.

Par ailleurs, pour un pneumatique à l'état neuf ou dans un état usé, dans tout plan circonférentiel perpendiculaire à l'axe de rotation du pneumatique, on peut déterminer un taux d'entaillement circonférentiel TEC, mesuré le long de la courbe d'intersection entre le plan circonférentiel et la surface de roulement. Ce taux d'entaillement circonférentiel TEC est défini comme le ratio entre la longueur circonférentielle de creux LC, correspondant à la largeur cumulée des creux coupés par le plan circonférentiel et mesurée dans la surface de roulement, et la longueur circonférentielle totale L, correspondant à la longueur de la courbe d'intersection entre le plan circonférentiel et la surface de roulement.

Chaque élément de sculpture peut être caractérisé géométriquement par une hauteur radiale H selon une direction radiale, une largeur axiale A selon une direction axiale et une longueur circonférentielle B selon une direction circonférentielle. Ces trois dimensions H, A et B sont des valeurs moyennes, sachant qu'elles peuvent varier selon les points de mesure sélectionnés sur l'élément de sculpture. Concernant la largeur axiale A et la longueur circonférentielle B, elles peuvent augmenter à partir de la surface de roulement jusqu'à la surface portante, en fond de creux, du fait de la présence de dépouilles. Concernant la hauteur radiale H, pour un pneumatique radial pour roue motrice d'un tracteur agricole, la hauteur radiale H d'un élément de sculpture est généralement au moins égale à 50 mm et le plus généralement au moins égale à 60 mm. A partir de ces trois dimensions H, A et B, peuvent être définis, pour un élément de sculpture donné, un élancement circonférentiel H/B, un élancement axial H/A et un rapport de forme surfacique B/A.

Une bande de roulement pour véhicule agricole comprend usuellement des éléments de sculpture ayant la forme de barrettes. Une barrette a généralement une forme allongée globalement parallélépipédique, continue ou discontinue, et constituée d'au moins une portion rectiligne ou curviligne. Une barrette est séparée des barrettes adjacentes par des creux ou sillons. Une barrette s'étend axialement à partir d'une zone médiane de la bande de roulement jusqu' à ses extrémités axiales ou épaules. Une barrette comprend une face de contact, positionnée dans la surface de roulement et destinée à entrer totalement en contact avec le sol, une face d'attaque, coupant la surface de roulement et dont l'arête d'intersection avec celle-ci est destinée à entrer en contact en premier avec le sol, une face de fuite, coupant la surface de roulement et dont l'arête d'intersection avec celle-ci est destinée à entrer en contact en dernier avec le sol, et deux faces latérales.

Les barrettes sont réparties circonférentiellement avec un pas constant ou variable et sont généralement disposées de part et d'autre du plan équatorial du pneumatique, de manière à former un motif en V, la pointe du motif en V (ou encore motif en chevron) étant destinée à entrer la première dans l'aire de contact avec le sol. Les barrettes présentent généralement une symétrie par rapport au plan équatorial du pneumatique, avec le plus souvent un décalage circonférentiel entre les deux rangées de barrettes, obtenu par une rotation autour de l'axe du pneumatique d'une moitié de la bande de roulement par rapport à l'autre moitié de la bande de roulement.

Un pneumatique radial pour véhicule agricole comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule agricole comprend au moins une couche de carcasse reliant les deux bourrelets entre eux. Les renforts d'une couche de carcasse sont sensiblement parallèles entre eux et forment, avec la direction circonférentielle, un angle compris entre 75° et 105°, de préférence entre 85° et 95°. Une couche de carcasse comprend des renforts le plus souvent textiles, enrobés par un matériau polymérique de type élastomère ou élastomérique appelé mélange d'enrobage.

L'armature de sommet d'un pneumatique radial pour véhicule agricole comprend une superposition de couches de sommet s'étendant circonférentiellement, radialement à l'extérieur de l'armature de carcasse. Chaque couche de sommet est constituée de renforts enrobés par un mélange élastomérique et parallèles entre eux. Lorsque les renforts de couche de sommet forment, avec la direction circonférentielle, un angle au plus égal à 10°, ils sont dits circonférentiels, ou sensiblement circonférentiels, et assurent une fonction de frettage limitant les déformations radiales du pneumatique. Lorsque les renforts de couche de sommet forment, avec la direction circonférentielle, un angle au moins égal à 10° et le plus souvent au plus égal à 30°, ils sont appelés renforts à angle et ont une fonction de reprise des efforts transversaux, parallèles à la direction axiale, appliqués au pneumatique. Les renforts de couche de sommet peuvent être constitués par des matériaux polymériques de type textiles, tels qu'un polyester, par exemple un polyéthylène téréphtalate (PET), un polyamide aliphatique, par exemple un nylon, un polyamide aromatique, par exemple l'aramide, ou encore la rayonne, ou par des matériaux métalliques, tels que l'acier, ou toute combinaison des matériaux précédemment cités.

Un pneumatique pour véhicule agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour véhicule agricole doit présenter un compromis de performances entre, de façon non exhaustive, la traction en champ sur sol meuble, la résistance aux arrachements, la résistance à l'usure sur route, la résistance à l'avancement, le confort vibratoire sur route.

Un problème essentiel pour l'utilisation d'un pneumatique en champ est de limiter au maximum la compaction du sol par le pneumatique, susceptible de nuire aux cultures.

C'est la raison pour laquelle, dans le domaine agricole, des pneumatiques à basse pression, donc à forte flexion, ont été développés. La norme ETRTO distingue ainsi les pneumatiques IF (Improved Flexion), avec une pression de gonflage minimale recommandée généralement égale à 240 kPa, et les pneumatiques VF (Very high Flexion), avec une pression de gonflage minimale recommandée généralement égale à 160 kPa. Selon la norme, par rapport à un pneumatique standard, un pneumatique IF a une capacité de charge augmentée de 20%, et un pneumatique VF a une capacité de charge augmentée de 40%, pour une pression de gonflage égale à 160 kPa.

Toutefois l'utilisation de pneumatiques à basse pression a eu un impact négatif sur le comportement en champ. Ainsi la baisse de la pression de gonflage a entrainé une diminution des rigidités transversale et de dérive du pneumatique, d'où une diminution de la poussée transversale du pneumatique, et, par conséquent, une dégradation de son comportement sous sollicitations transversales.

Une solution pour rétablir une poussée transversale correcte a été de rigidifier transversalement l'armature de sommet du pneumatique, en remplaçant les couches de sommet à renforts textiles par des couches de sommet à renforts métalliques. Ainsi, par exemple, une armature de sommet comprenant 6 couches de sommet à renforts textiles de type Rayonne a été remplacée par une armature de sommet comprenant 2 couches de sommet à renforts en acier. Le document EP 2934917 A1 décrit ainsi un pneumatique IF comprenant une armature de sommet comprenant au moins deux couches de sommet à renforts métalliques, combinée avec une armature de carcasse comprenant au moins deux couches de carcasse à renforts textiles.

Mais l'utilisation de couches de sommet à renforts métalliques, dans un pneumatique pour véhicule agricole, peut entraîner une diminution de l'endurance du sommet du pneumatique, du fait d'une rupture prématurée des renforts métalliques.

Pour limiter ces problèmes d'endurance du sommet, les fabricants de pneumatiques ont proposé de revenir à une pression d'usage recommandée dans le cas de couches de sommet à renforts métalliques, supérieure à celle recommandée dans le cas de couches de sommet à renforts textiles. Par exemple, il a pu être recommandé de gonfler un pneumatique avec des couches de sommet à renforts métalliques à une pression égale à 2.7 bars, au lieu de 2 bars, pression recommandée pour un pneumatique avec des couches de sommet à renforts textiles et destiné à rouler dans les mêmes conditions de charge et de vitesse, soit une augmentation de 35%. Cette solution, basée sur une augmentation de la pression de gonflage, est insatisfaisante, car une augmentation de pression dégrade la performance de compaction d'un sol meuble.

Les inventeurs se sont alors donnés pour objectif d'augmenter l'endurance d'une armature de sommet comprenant des renforts métalliques jusqu'à un niveau au moins équivalent à celle d'une armature de sommet comprenant des renforts textiles, en particulier pour un pneumatique pour véhicule agricole fonctionnant à basse pression tel qu'un pneumatique IF (Improved Flexion) ou un pneumatique VF (Very High Flexion).

Ce but a été atteint, selon l'invention, par un pneumatique pour véhicule agricole ayant une largeur de section nominale L, au sens de la norme ETRTO, et comprenant, radialement de l'extérieur vers l'intérieur, une bande de roulement et une armature de sommet :
- la bande de roulement comprenant des éléments de sculpture, séparés les uns des autres par des creux, et s'étendant radialement vers l'extérieur à partir d'une surface portante jusqu'à une surface de roulement,
- la bande de roulement ayant un taux d'entaillement volumique TEV, défini comme le ratio entre le volume de creux VC et le volume total de la bande de roulement supposée sans creux V, compris entre la surface portante et la surface de roulement,
- chaque élément de sculpture ayant un élancement circonférentiel H/B, H étant la hauteur radiale moyenne entre la surface portante et la surface de roulement et B étant la longueur circonférentielle moyenne de l'élément de sculpture,
- toute portion de bande de roulement, axialement positionnée, par rapport à un plan équatorial du pneumatique, à une distance axiale DE, ayant une largeur axiale LE et un taux d'entaillement volumique local TEVL, défini comme le rapport entre le volume VCL des creux et le volume total VL de ladite portion de bande de roulement, compris entre la surface portante et la surface de roulement,
- l'armature de sommet comprenant au moins deux couches de sommet, comprenant chacune des renforts métalliques enrobés dans un matériau élastomérique, parallèles entre eux et formant, avec une direction circonférentielle, un angle au moins égal à 10°,
- pour toute portion de bande de roulement, axialement positionnée, par rapport au plan équatorial du pneumatique, à une distance axiale DE au plus égale à 0.36*L, et ayant une largeur axiale LE égale à 0.08* L, le produit TEVL*(H/B) du taux d'entaillement volumique local de la portion de bande de roulement par l'élancement circonférentiel H/B de tout élément de sculpture de ladite portion de bande de roulement étant au plus égal à 0,35
- la bande de roulement comprenant un nombre total N d'éléments de sculpture, chaque élément de sculpture comprenant une face de contact, une face d'attaque et une face de fuite, ladite face d'attaque étant inclinée d'un angle α vers l'arrière par rapport à la direction radiale selon le sens de roulement de la bande de roulement, ladite bande de roulement comprenant un nombre N1 d'éléments de sculpture pour lesquels l'angle α est compris entre 50 degrés et 75 degrés, le nombre N1 étant au moins égal à 0,2 x N.

Le principe de l'invention est donc de proposer un pneumatique pour véhicule agricole, ayant une armature de sommet à renforts métalliques et comprenant une bande roulement avec un taux d'entaillement volumique TEV et des caractéristiques géométriques locales spécifiques.

La caractérisation géométrique locale de la bande de roulement est définie pour des portions de bandes de roulement s'étendant circonférentiellement sur toute la circonférence du pneumatique et ayant une largeur LE, égale, par convention, à 0.08*L, c'est-à-dire à 8% de la largeur de section nominale L du pneumatique. Par définition, la largeur de section nominale L du pneumatique, au sens de la norme ETRTO, est celle qui entre dans la dénomination du pneumatique : par exemple, un pneumatique de dimension 600/70 R 30 a une largeur de section nominale égale à 600 mm.

En outre, chaque portion de bande roulement est axialement positionnée, par rapport au plan équatorial qui est le plan circonférentiel passant par le milieu de la bande de roulement, à une distance axiale DE, définie comme la distance axiale entre le plan moyen circonférentiel de la portion de bande de roulement et le plan équatorial du pneumatique. Dans le contexte de l'invention, sont prises en considération les portions de bande de roulement axialement positionnées à une distance axiale DE au plus égale à 0.36*L, c'est-à-dire à 36% de la largeur nominale L de la section du pneumatique. Par conséquent, les portions de bande de roulement prises en considération sont comprises dans une zone utile de bande de roulement, centrée sur le plan équatorial et correspondant à 80% de la largeur de section nominale L du pneumatique.

En outre chaque portion de bande de roulement est caractérisée par un taux d'entaillement volumique local TEVL, défini comme le rapport entre le volume VCL des creux et le volume total VL de ladite portion de bande de roulement, compris entre la surface portante et la surface de roulement. Par ailleurs, chaque élément de sculpture de ladite portion de bande de roulement est caractérisé par un élancement circonférentiel H/B, H étant la hauteur radiale moyenne entre la surface portante et la surface de roulement et B étant la longueur circonférentielle moyenne de l'élément de sculpture.

Selon l'invention, pour toute portion de bande de roulement, axialement positionnée, par rapport au plan équatorial du pneumatique, à une distance axiale DE au plus égale à 0.36*L, et ayant une largeur axiale LE égale à 0.08* L, le produit TEVL*(H/B) du taux d'entaillement volumique local de la portion de bande de roulement par l'élancement circonférentiel H/B de tout élément de sculpture de ladite portion de bande de roulement est au plus égal à 0,35. Ce critère définit, pour toute portion de bande de roulement telle que précédemment définie, une combinaison entre le taux d'entaillement volumique local TEVL et l'élancement circonférentiel H/B des éléments de sculpture de ladite portion de bande de roulement, permettant de limiter le basculement des éléments de sculpture selon la direction circonférentielle.

Les inventeurs ont montré qu'une bande de roulement selon l'invention, caractérisée par des éléments de sculpture dits à faible basculement circonférentiel, contribue à l'augmentation de l'endurance de l'armature de sommet du pneumatique comprenant des renforts métalliques.

En effet, lors du roulage d'un pneumatique pour véhicule agricole comprenant une bande de roulement à barrettes, et plus généralement à éléments de sculpture à forte hauteur radiale, le basculement des éléments de sculpture sous couple (moteur ou freineur) entraine un basculement des couches de sommet, positionnées radialement à l'intérieur des barrettes. Ce basculement entraîne des courbures alternativement positives et négatives des couches de sommet, et corrélativement des cycles alternativement en compression/extension des renforts métalliques des couches de sommet, susceptibles d'entraîner une rupture en fatigue desdits renforts métalliques sous l'action de ces sollicitations de flexion alternées. Ce phénomène de basculement est d'autant plus important que la pression de gonflage du pneumatique est faible et est donc particulièrement critique pour les pneumatiques pour véhicule agricole fonctionnant à basse pression tel que les pneumatiques IF (Improved Flexion) ou les pneumatiques VF (Very High Flexion).

Il est à noter également que les couches de sommet d'un pneumatique pour véhicule agricole présentent généralement des courbures initiales, à la fois selon la direction circonférentielle et selon la direction axiale, résultant des mouvements des divers constituants élastomériques et des renforts au cours de la fabrication, lors du moulage et de la cuisson du pneumatique. Ces déformations initiales s'ajoutent aux déformations résultant du basculement des éléments de sculpture et contribuent donc également aux cycles en compression/extension des renforts métalliques des couches de sommet, lors du roulage du pneumatique.

Ainsi des éléments de sculpture à faible basculement circonférentiel selon l'invention induisent, dans les renforts métalliques des couches de sommet, des cycles en compression/extension d'amplitude limitée, d'où une amélioration de l'endurance de l'armature de sommet du pneumatique, et donc une augmentation de la durée de vie du pneumatique.

Encore selon l'invention, la bande de roulement comprend un nombre total N d'éléments de sculpture, chaque élément de sculpture comprenant une face de contact, une face d'attaque et une face de fuite, ladite face d'attaque étant inclinée d'un angle α vers l'arrière par rapport à la direction radiale selon le sens de roulement de la bande de roulement, ladite bande de roulement comprenant un nombre N1 d'éléments de sculpture pour lesquels l'angle α est compris entre 50 degrés et 75 degrés, le nombre N1 étant au moins égal à 0,2 x N.

Autrement dit, au moins 20% des éléments de sculpture ont une face d'attaque ayant un angle de dépouille compris entre 50° et 75°. Cette caractéristique d'inclinaison de la face d'attaque d'une partie significative des éléments de sculpture apporte à la fois un gain sensible en termes de traction sur sol meuble et un gain en rigidité de flexion circonférentielle limitant le basculement de l'élément de sculpture.

Préférentiellement, le taux d'entaillement volumique TEV de la bande de roulement est au moins égal à 35%. Pour un pneumatique pour véhicule agricole de l'état de la technique, le taux d'entaillement volumique TEV est généralement au moins égal à 50% et souvent au moins égal à 60%. Pour un pneumatique selon l'invention, le taux d'entaillement volumique TEV est généralement plus faible et peut descendre jusqu'à 35% pour compenser la diminution du volume de matière due à la diminution de hauteur radiale moyenne des éléments de sculpture.

Avantageusement la hauteur radiale moyenne H de chaque élément de sculpture est au moins égale à 20 mm. Une telle valeur minimale de hauteur radiale moyenne H permet d'obtenir un compromis entre un basculement limité des éléments de sculpture et un volume de matière à user suffisant, donc un compromis entre la capacité de traction et la durée de vie en termes d'usure du pneumatique.

Encore avantageusement la hauteur radiale moyenne H de chaque élément de sculpture est au plus égale à 50 mm. Une hauteur radiale moyenne H ainsi limitée contribue également à limiter le basculement des éléments de sculpture et donc à augmenter l'endurance de l'armature de sommet.

Préférentiellement, dans tout plan circonférentiel axialement positionné à au plus 0.4*L, le taux d'entaillement circonférentiel TEC1 à l'état neuf est au moins égal à 1.45 fois taux d'entaillement circonférentiel TEC2 à l'état usé. Par définition, dans un plan circonférentiel donné, le taux d'entaillement circonférentiel TEC1 à l'état neuf est mesuré le long de la courbe d'intersection entre le plan circonférentiel et la surface de roulement à l'état neuf et est défini comme le ratio entre la longueur circonférentielle de creux LC1 et la longueur circonférentielle totale L1. De façon analogue, dans ce même plan circonférentiel, le taux d'entaillement circonférentiel TEC2 à l'état usé est mesuré le long de la courbe d'intersection entre le plan circonférentiel et la surface de roulement à l'état usé, la surface de roulement à l'état usé étant radialement positionnée à l'extérieur de la surface portante à une distance radiale HR, et est défini comme le ratio entre la longueur circonférentielle de creux LC2 et la longueur circonférentielle totale L2. La distance radiale HR est la hauteur résiduelle de l'élément de sculpture correspondant à l'état usé en fin de vie du pneumatique avant retrait du véhicule, et est généralement égale à 10 mm.

Selon ce critère, dans tout plan circonférentiel, la longueur de creux, à l'état neuf, est donc supérieure à la longueur de creux, à l'état usé. En d'autres termes, la longueur circonférentielle de tout élément de sculpture, destiné à entrer en contact avec un sol, augmente en passant de l'état neuf à l'état usé. Ce critère traduit l'évasement, selon la direction circonférentielle, des éléments de sculpture vers l'intérieur, c'est-à-dire la présence d'angles ou dépouilles au niveau des faces d'attaque et de fuite des éléments de sculpture. Cette forme d'élément de sculpture contribue à la rigidification de l'élément de sculpture en flexion circonférentielle, donc à une diminution de son basculement.

Selon un premier mode de répartition des éléments de sculpture, pour un pneumatique dont la bande de roulement est constituée par au moins 5 rangées circonférentielles d'éléments de sculpture séparées les unes des autres par des creux sensiblement circonférentiels s'étendant sur toute la circonférence du pneumatique, la bande de roulement comprend des creux transversaux s'étendant continûment d'un bord axial à l'autre de la bande de roulement. Un creux est dit sensiblement circonférentiel lorsque son axe moyen forme avec, la direction circonférentielle, un angle au plus égal à 45°, et le plus souvent au plus égal à 10°. Plus précisément, de part et d'autre du plan équatorial du pneumatique, les éléments de sculpture, ayant sensiblement comme base un quadrilatère, forment entre eux des motifs inclinés en chevrons par rapport à la direction circonférentielle. Au sein de chaque motif, les éléments de sculpture sont disposés de telle sorte que leurs faces d'attaque sont alignées entre elles, c'est à dire qu'elles forment ensemble une quasi-continuité seulement interrompue par des creux circonférentiels. Par conséquent, les éléments de sculpture ne sont pas décalés circonférentiellement d'une rangée à l'autre.

Selon un second mode de répartition des éléments de sculpture, pour un pneumatique dont la bande de roulement est constituée par au moins 5 rangées circonférentielles d'éléments de sculpture séparées les unes des autres par des creux sensiblement circonférentiels, s'étendant sur toute la circonférence du pneumatique, la bande de roulement comprend des creux transversaux s'étendant de façon discontinue d'un bord axial à l'autre de la bande de roulement, de telle sorte que les éléments de sculpture d'une rangée circonférentielle donnée ont un décalage angulaire selon la direction circonférentielle par rapport à ceux d'une rangée adjacente. Comme précédemment, de part et d'autre du plan équatorial du pneumatique, les éléments de sculpture, ayant sensiblement comme base un quadrilatère, forment entre eux des motifs inclinés en chevrons par rapport à la direction circonférentielle. Mais, au sein de chaque motif, les éléments de sculpture sont disposés de sorte que leurs faces d'attaque sont circonférentiellement décalées les unes par rapport aux autres. Par conséquent, les éléments de sculpture sont décalés circonférentiellement d'une rangée à l'autre.

Selon un mode de réalisation particulier et avantageux de l'armature de sommet, tout renfort métallique de couche de sommet a une loi de comportement élastique en extension, dite bi-module, comprenant une première portion ayant un premier module en extension MG1 au plus égal à 30 GPa, et une deuxième portion ayant un deuxième module en extension MG2 au moins égal à 2 fois le premier module en extension MG1, ladite loi de comportement en extension étant déterminée pour un renfort métallique enrobé dans un mélange élastomérique ayant un module d'élasticité en extension à 10% d'allongement MA10 au moins égal à 5 MPa et au plus égal à 15 MPa, et tout renfort métallique de couche de sommet (31, 32) a une loi de comportement en compression, caractérisée par une déformation critique de flambage en compression E0 au moins égal à 3%, ladite loi de comportement en compression étant déterminée sur une éprouvette constituée par un renfort placé en son centre et enrobé par un volume parallélépipédique de mélange élastomérique ayant un module d'élasticité en extension à 10% d'allongement MA10 au moins égal à 5 MPa et au plus égal à 15 MPa.

Dans ce mode de réalisation particulier, les inventeurs proposent ainsi d'utiliser, en combinaison avec une bande de roulement selon l'invention, des renforts métalliques élastiques dont les lois de comportement ont des caractéristiques spécifiques à la fois en extension et en compression.

En ce qui concerne son comportement en extension, un renfort métallique nu, c'est-à-dire non enrobé par un matériau élastomérique, est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en extension du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées, par exemple, selon la norme ISO 6892 de 1984 ou la norme ASTM D2969-04 de 2014.

Dans le contexte de l'invention, la loi de comportement en extension d'un renfort métallique est déterminée pour un renfort métallique enrobé dans un matériau élastomérique cuit, correspondant à un renfort métallique extrait du pneumatique, sur la base de la norme ISO 6892 de 1984 comme pour un renfort métallique nu. A titre d'exemple, et de façon non exhaustive, un matériau élastomérique d'enrobage cuit est une composition à base de caoutchouc ayant un module d'élasticité en extension sécant à 10% d'allongement MA10 au moins égal à 5 MPa et au plus égal à 15 MPa, par exemple égal à 6 MPa. Ce module d'élasticité en extension est déterminé à partir d'essais de traction réalisés conformément à la norme française NF T 46-002 de septembre 1988.

A partir de la courbe force-allongement, pour une loi de comportement élastique bi-module comprenant une première portion et une deuxième portion, on peut définir une première rigidité en extension KG1, représentant la pente de la droite sécante passant par l'origine du repère, dans lequel est représentée la loi de comportement, et le point de transition entre les première et deuxième portions. De même, on peut définir une deuxième rigidité en extension KG2, représentant la pente d'une droite passant par deux points positionnés dans une partie sensiblement linéaire de la deuxième portion.

A partir de la courbe force-allongement, caractérisant le comportement en extension d'un renfort, on peut définir également une courbe contrainte-déformation, la contrainte étant égale au rapport entre la force de traction appliquée au renfort et la surface de la section du renfort, et la déformation étant l'allongement relatif du renfort. Pour une loi de comportement élastique bi-module comprenant une première portion et une deuxième portion, on peut définir un premier module en extension MG1, représentant la pente de la droite sécante passant par l'origine du repère, dans lequel est représentée la loi de comportement, et le point de transition entre les première et deuxième portions. De même, on peut définir un deuxième module en extension MG2, représentant la pente d'une droite passant par deux points positionnés dans une partie sensiblement linéaire de la deuxième portion. Les rigidités en extension KG1 et KG2 sont respectivement égales à MG1*S et MG2*S, S étant la surface de la section du renfort.

Concernant le comportement en extension des renforts métalliques, tout renfort métallique de couche de sommet a une loi de comportement élastique en extension, dite bi-module, comprenant une première portion dite à bas module ayant un premier module en extension MG1 au plus égal à 30 GPa, et une deuxième portion dite à haut module ayant un deuxième module en extension MG2 au moins égal à 2 fois le premier module en extension MG1.

En ce qui concerne le comportement en compression, un renfort métallique est caractérisé mécaniquement par une courbe représentant la force de compression (en N), appliquée au renfort métallique, en fonction de sa déformation en compression (en %). Une telle courbe en compression est en particulier caractérisée par un point limite, défini par une force critique de flambage Fc et une déformation critique de flambage E0, au-delà duquel le renfort est soumis à un flambage en compression, correspondant à un état d'instabilité mécanique caractérisé par de grandes déformations du renfort avec une diminution de l'effort de compression.

La loi de comportement en compression est déterminée, à l'aide d'une machine de test de type Zwick ou Instron, sur une éprouvette de dimensions 12 mm x 21 mm x 8 mm (largeur x hauteur x épaisseur). L'éprouvette est constituée par un renfort, placé en son centre et enrobé par un volume parallélépipédique de mélange élastomérique définissant le volume de l'éprouvette, l'axe du renfort étant placé selon la hauteur de l'éprouvette. Dans le contexte de l'invention, le mélange élastomérique de l'éprouvette a un module d'élasticité en extension sécant à 10% d'allongement MA10 au moins égal à 5 MPa et au plus égal à 15 MPa, par exemple égal à 6 MPa. L'éprouvette est comprimée dans le sens de la hauteur. à une vitesse de 3 mm / mn jusqu'à une déformation en compression, c'est-à-dire un écrasement de l'éprouvette égale à 10% de sa hauteur initiale, à température ambiante. La force critique de flambage Fc et la déformation critique de flambage E0 correspondante sont atteintes lorsque l'effort appliqué diminue alors que la déformation continue à augmenter. En d'autres termes la force critique de flambage Fc correspond à la force de compression maximale Fmax.

Concernant le comportement en compression des renforts métalliques, tout renfort métallique de couche de sommet a une loi de comportement en compression, caractérisée par une déformation critique de flambage en compression E0 au moins égal à 3%.

Les inventeurs ont montré que des renforts métalliques dits élastiques, caractérisés par des lois de comportement en extension et en compression telles que précédemment décrites, ont une limite d'endurance en fatigue, lors de cycles répétés alternativement en extension et en compression, supérieure à celle des renforts métalliques usuels.

En conclusion, la combinaison d'une bande de roulement, comprenant des éléments de sculpture à faible basculement circonférentiel, et d'une armature de sommet, comprenant des renforts métalliques élastiques avec des lois de comportement en extension et en compression telles que précédemment décrites, permet d'augmenter encore l'endurance de l'armature de sommet.

Les caractéristiques de l'invention sont illustrées par les figures 1 à 12 schématiques et non représentées à l'échelle :
- Figure 1 : Demi-coupe méridienne d'un pneumatique pour véhicule agricole selon l'invention
- Figure 2 : Vue en perspective d'un pneumatique pour véhicule agricole selon un premier mode de réalisation de l'invention
- Figure 3 : Vue de face d'un pneumatique pour véhicule agricole selon un premier mode de réalisation de l'invention
- Figure 4 : Détail de la bande de roulement d'un pneumatique pour véhicule agricole selon un premier mode de réalisation de l'invention
- Figure 5 : Coupe circonférentielle de la bande de roulement d'un pneumatique pour véhicule agricole selon un premier mode de réalisation de l'invention
- Figure 6 : Détail de la coupe circonférentielle de la bande de roulement d'un pneumatique pour véhicule agricole selon un premier mode de réalisation de l'invention
- Figure 7 : Vue en perspective d'un pneumatique pour véhicule agricole selon un deuxième mode de réalisation de l'invention
- Figure 8 : Vue de face d'un pneumatique pour véhicule agricole selon un deuxième mode de réalisation de l'invention
- Figure 9 : Vue de face d'un pneumatique pour véhicule agricole selon un troisième mode de réalisation de l'invention
- Figure 10 : Coupe circonférentielle de la bande de roulement d'un pneumatique pour véhicule agricole selon un troisième mode de réalisation de l'invention
- Figure 11 : Exemple-type de courbe force de traction-allongement type d'un renfort métallique élastique, enrobé par un matériau élastomérique
- Figure 12 : Exemple-type de courbe force de compression-déformation en compression d'un renfort métallique élastique, obtenu sur une éprouvette en matériau élastomérique

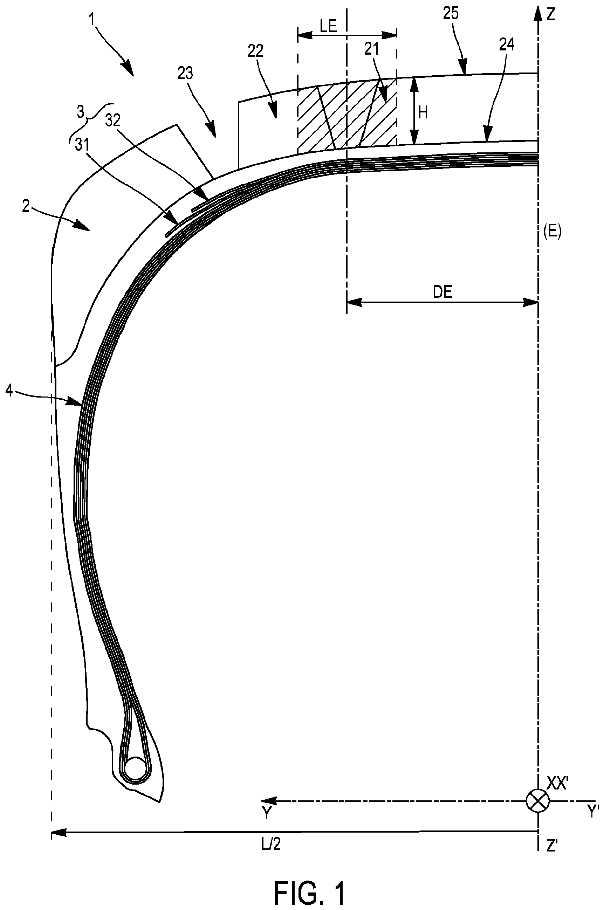

La figure 1 représente une demi-coupe méridienne d'un pneumatique 1 pour véhicule agricole, dans un plan méridien YZ passant par l'axe de rotation YY' du pneumatique. Le pneumatique 1 a une largeur de section nominale L, au sens de la norme ETRTO - seule une demi-largeur L/2 est représentée - et comprend une armature de sommet 3 radialement intérieure à une bande de roulement 2 et radialement extérieure à une armature de carcasse 4. L'armature de sommet 3 comprend deux couches de sommet (31, 32), comprenant chacune des renforts métalliques enrobés dans un matériau élastomérique, parallèles entre eux et formant, avec une direction circonférentielle XX', un angle au moins égal à 10° (non représenté). L'armature de sommet 4 comprend trois couches de carcasse comprenant des renforts textiles enrobés dans un matériau élastomérique, parallèles entre eux et formant, avec la direction circonférentielle XX', un angle au moins égal à 85° et au plus égal à 95° (non représenté). La bande de roulement 2 comprend des éléments de sculpture 22, séparés les uns des autres par des creux 23, et s'étendant radialement vers l'extérieur à partir d'une surface portante 24 jusqu'à une surface de roulement 25. Est également représentée, en hachures, une portion de bande de roulement 21, axialement positionnée, par rapport au plan équatorial E du pneumatique, à une distance axiale DE au plus égale à 0.36*L, et ayant une largeur axiale LE égale à 0.08* L. Selon l'invention, pour une telle portion de bande de roulement 21, le produit TEVL*(H/B) du taux d'entaillement volumique local de la portion de bande de roulement 21 par l'élancement circonférentiel H/B de tout élément de sculpture 22 de ladite portion de bande de roulement 21 est au plus égal à 0,35. Le taux d'entaillement volumique local TEVL est défini comme le rapport entre le volume VCL des creux 23 et le volume total VL de ladite portion de bande de roulement 21, compris entre la surface portante 24 et la surface de roulement 25. L'élancement circonférentiel H/B est le rapport entre la hauteur radiale moyenne H entre la surface portante 24 et la surface de roulement 25 et B étant la longueur circonférentielle moyenne B (non représentée) de l'élément de sculpture 22.

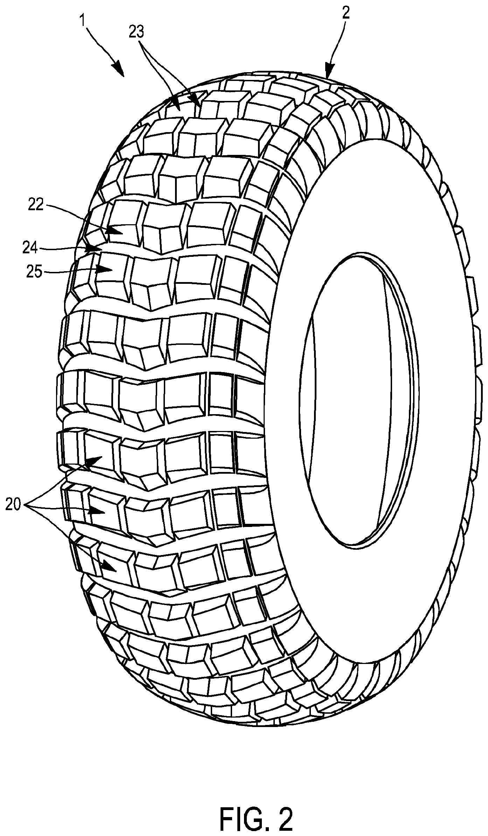

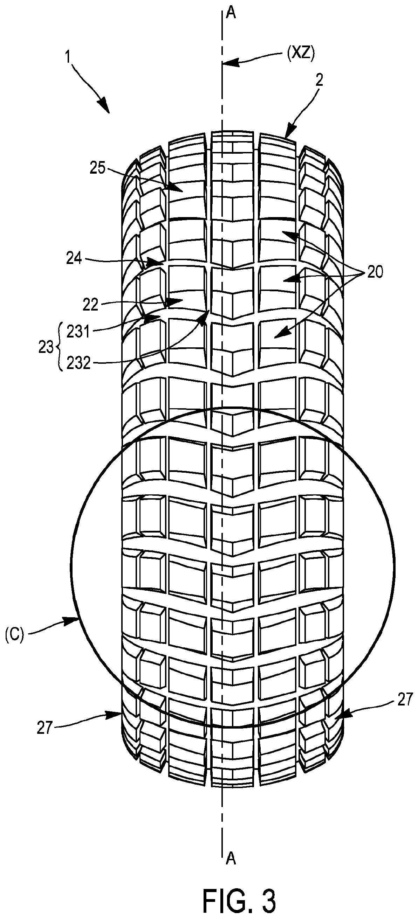

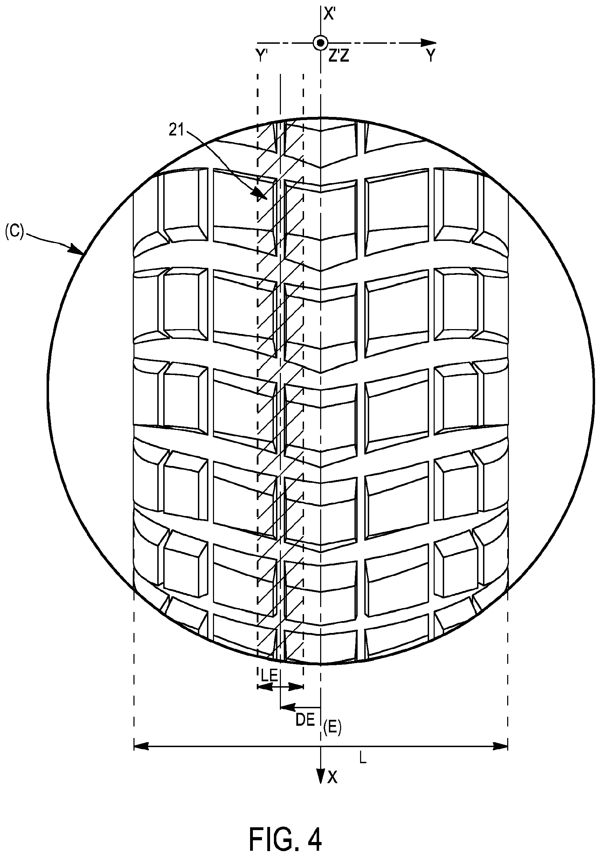

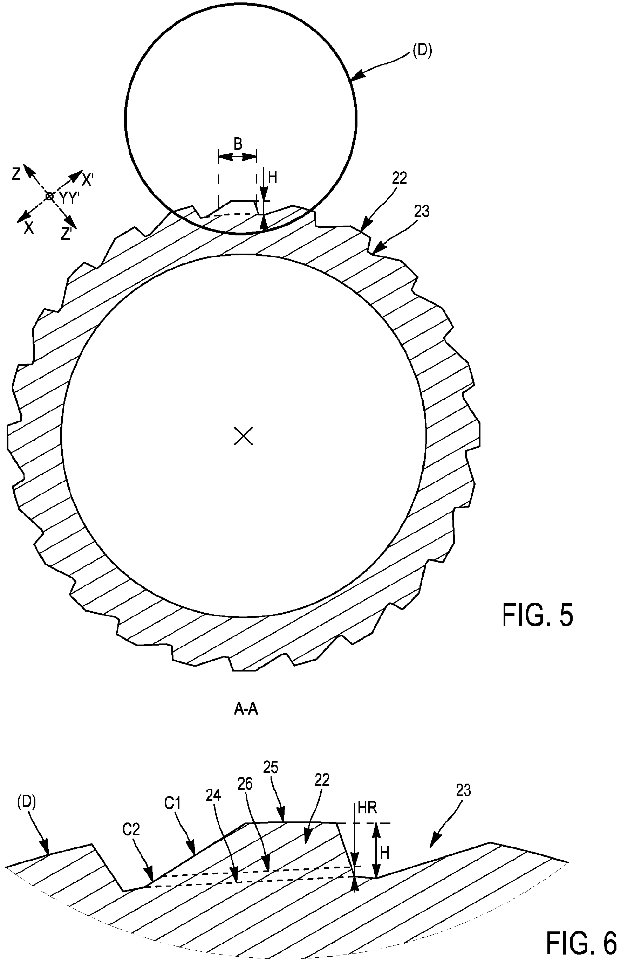

Les figures 2 et 3 sont respectivement une vue en perspective et une vue de face d'un pneumatique 1 pour véhicule agricole selon un premier mode de réalisation de l'invention. Selon ce premier mode de réalisation, la bande de roulement 2 est constituée par sept rangées circonférentielles 20 d'éléments de sculpture 22 s'étendant radialement vers l'extérieur à partir d'une surface portante 24 jusqu'à une surface de roulement 25, et séparés les uns des autres par des creux 23. Les creux 23 sont soit des creux circonférentiels 231 s'étendant sur toute la circonférence du pneumatique, soit des creux transversaux 232 s'étendant continûment d'un bord axial 27 à l'autre de la bande de roulement. Dans le cas représenté, les éléments de sculpture constituent des motifs en chevrons. Sur la figure 3, sont représentés le détail de bande de roulement C, objet de la figure 4, ainsi que le plan circonférentiel XZ selon la coupe circonférentielle A-A, objet de la figure 5.

La figure 4 est un détail de la bande de roulement d'un pneumatique 1 pour véhicule agricole selon le premier mode de réalisation de l'invention. Sur ce détail C, est représenté, en particulier, sous forme de hachures, une portion de bande de roulement 21, axialement positionnée, par rapport au plan équatorial E du pneumatique, à une distance axiale DE au plus égale à 0.36*L, et ayant une largeur axiale LE égale à 0.08*L, pour laquelle, selon l'invention, le produit TEVL*(H/B) du taux d'entaillement volumique local de la portion de bande de roulement 21 par l'élancement circonférentiel H/B de tout élément de sculpture 22 de ladite portion de bande de roulement 21 est au plus égal à 0,35.

La figure 5 est une coupe circonférentielle de la bande de roulement d'un pneumatique pour véhicule agricole selon le premier mode de réalisation de l'invention. Sur cette coupe A-A sont représentées la hauteur radiale moyenne H entre la surface portante 24 et la surface de roulement 25, ainsi que la longueur circonférentielle moyenne B de l'élément de sculpture 22, s'étendant radialement vers l'extérieur à partir d'une surface portante 24 jusqu'à une surface de roulement 25. La longueur circonférentielle moyenne B est la distance moyenne séparant la face d'attaque et la face de fuite de l'élément de sculpture 22.

La figure 6 est un détail de la coupe circonférentielle de la bande de roulement d'un pneumatique pour véhicule agricole selon le premier mode de réalisation de l'invention. Sur ce détail D est représenté un élément de sculpture 22 séparé des éléments de sculpture adjacents par des creux 23. Dans un plan circonférentiel XZ donné, la courbe d'intersection C1 entre le plan circonférentiel XZ et la surface de roulement 25 à l'état neuf permet de définir un taux d'entaillement circonférentiel TEC1 à l'état neuf, défini comme le ratio entre la longueur circonférentielle de creux LC1 et la longueur circonférentielle totale L1, la surface de roulement 25 à l'état neuf étant radialement positionnée à l'extérieur de la surface portante 24 à une distance radiale H. De façon analogue, la courbe d'intersection C2 entre le plan circonférentiel XZ et la surface de roulement 26 à l'état usé permet de définir un taux d'entaillement circonférentiel TEC2 à l'état usé, défini comme le ratio entre la longueur circonférentielle de creux LC2 et la longueur circonférentielle totale L2, la surface de roulement 26 à l'état usé étant radialement positionnée à l'extérieur de la surface portante 24 à une distance radiale HR. Avantageusement le taux d'entaillement circonférentiel TEC1 à l'état neuf est au moins égal à 1.45 fois taux d'entaillement circonférentiel TEC2 à l'état usé.

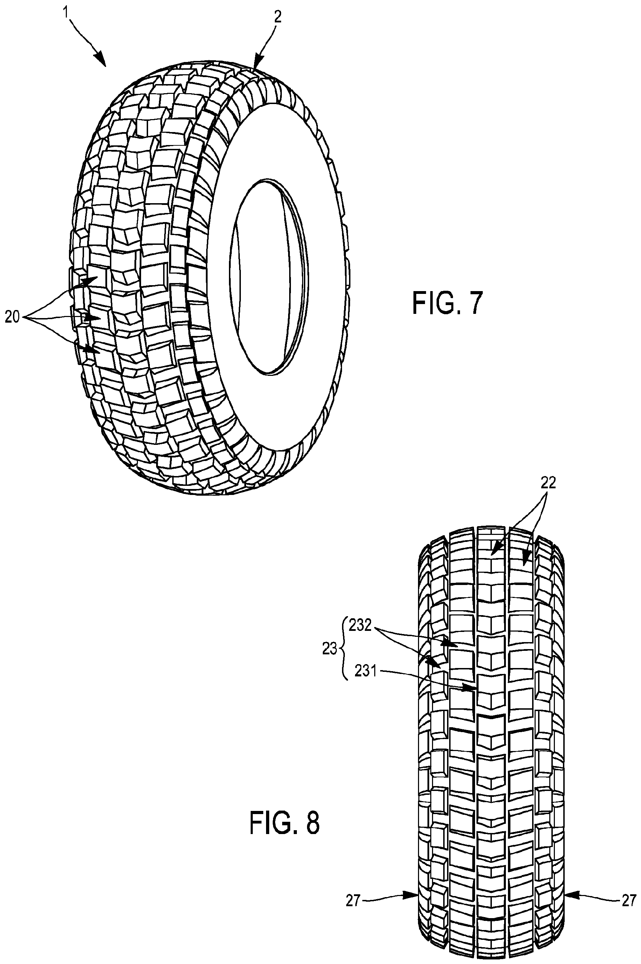

Les figures 7 et 8 sont respectivement une vue en perspective et une vue de face d'un pneumatique 1 pour véhicule agricole selon un deuxième mode de réalisation de l'invention. Selon ce deuxième mode de réalisation, la bande de roulement 2 est constituée par sept rangées circonférentielles 20 d'éléments de sculpture 22 séparés les uns des autres par des creux 23. Les creux 23 sont soit des creux circonférentiels 231 s'étendant sur toute la circonférence du pneumatique, soit des creux transversaux 232 s'étendant de façon discontinue d'un bord axial 27 à l'autre de la bande de roulement 2, de telle sorte que les éléments de sculpture 22 d'une rangée circonférentielle 20 donnée ont un décalage angulaire selon la direction circonférentielle par rapport à ceux d'une rangée adjacente.

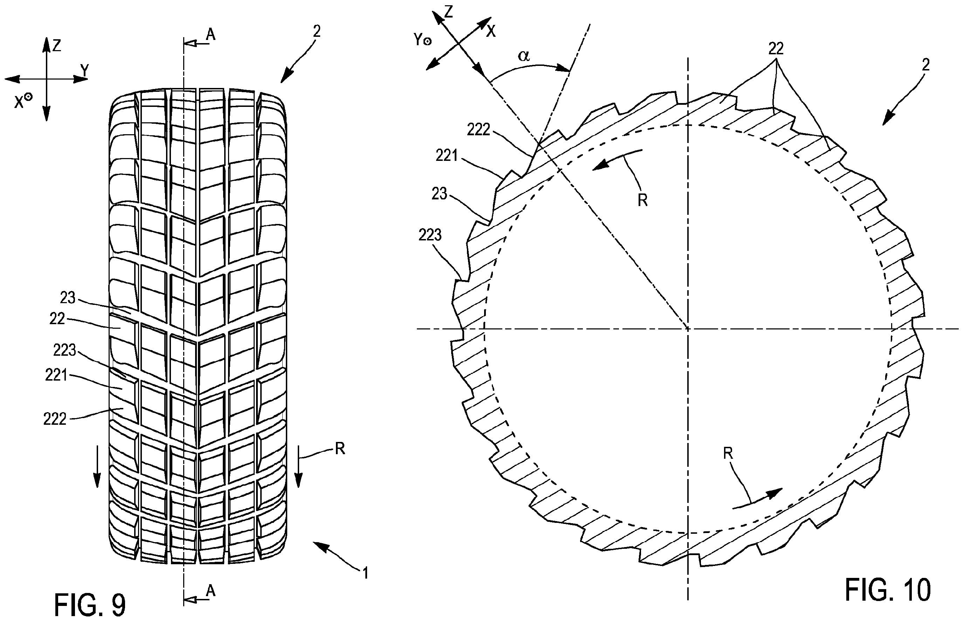

La figure 9 est une vue de face d'un pneumatique 1 pour véhicule agricole selon un troisième mode de réalisation de l'invention. Dans ce troisième mode de réalisation, la bande de roulement 2 comprend un nombre total N d'éléments de sculpture 22, chaque élément de sculpture 22 comprenant une face de contact 221, une face d'attaque 222 et une face de fuite 223, ladite face d'attaque étant inclinée d'un angle α vers l'arrière par rapport à la direction radiale ZZ' selon le sens de roulement R de la bande de roulement 2, ladite bande de roulement 2 comprenant un nombre N1 d'éléments de sculpture 22 pour lesquels l'angle α est compris entre 50 degrés et 75 degrés, le nombre N1 étant au moins égal à 0,2 x N. Chaque élément de sculpture 22 comporte donc une face de contact 221, une face d'attaque 222 et une face de fuite 223. La face de contact est la face au sommet de l'élément de sculpture 22 qui est destinée à rouler et porter la charge sur un sol rigide. Sur un sol meuble, les éléments de sculpture 22 peuvent s'enfoncer dans le sol. Dans le sens de roulement préférentiel du pneu, la face d'attaque 222 est alors celle qui entre la première dans l'aire de contact et peut transmettre un effort moteur alors que la face de fuite est celle qui sort la dernière de l'aire de contact. La face de fuite 223 ne peut transmettre d'effort au sol que lors d'une phase de freinage ou de marche arrière.

La figure 10 est une représentation de la section A-A issue de la vue de face du pneu représenté à la figure 9. Cette section permet de clairement visualiser l'orientation des faces d'attaque des éléments de sculpture 22. Les faces d'attaque sont inclinées par rapport à la direction radiale Z selon le sens opposé au sens de roulement préférentiel R et forment un angle α avec cette direction radiale Z. Sur cet exemple, l'angle α est égal à 60°, don compris entre 50° et 70°.

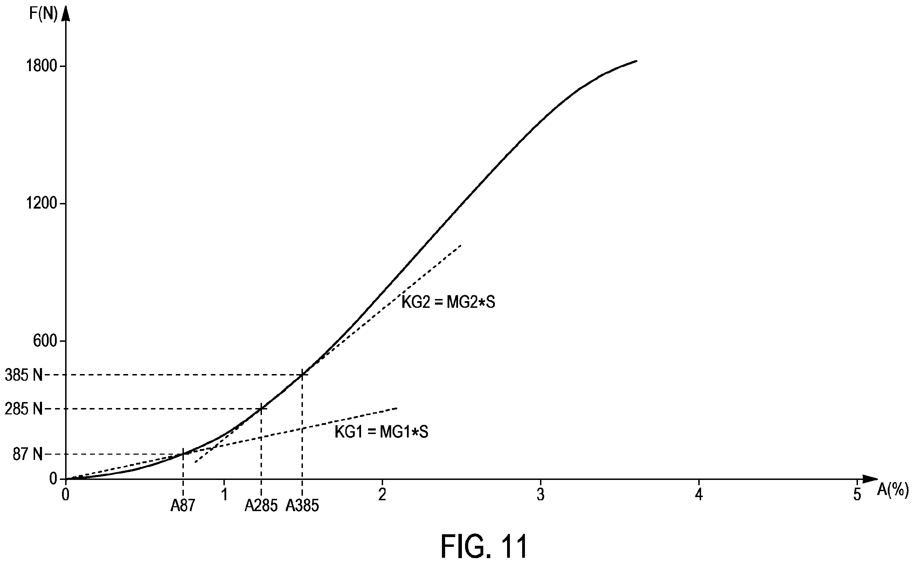

La figure 11 est un exemple-type de courbe force de traction-allongement relatif d'un renfort métallique élastique selon un mode de réalisation particulier de renfort métallique élastique, enrobé par un matériau élastomérique, représentant son comportement élastique en extension. La force de traction F est exprimée en N et l'allongement A est un allongement relatif, exprimé en %. Selon ce mode de réalisation, la loi de comportement en extension, élastique et bi-module, comprend une première portion et une deuxième portion. La première portion est délimitée par deux points dont les ordonnées correspondent respectivement à une force de traction nulle et une force de traction égale à 87 N, les abscisses respectives étant les allongements relatifs correspondants (en %). On peut définir une première rigidité en extension KG1, représentant la pente de la droite sécante passant par l'origine du repère, dans lequel est représentée la loi de comportement, et le point de transition entre les première et deuxième portions. Sachant que par définition, la rigidité en extension KG1 est égale au produit du module en extension MG1 par la surface S de la section du renfort, on peut en déduire aisément le module en extension MG1. La deuxième portion est l'ensemble des points correspondant à une force de traction supérieure à 87 N. De même, pour cette deuxième portion, on peut définir une deuxième rigidité en extension KG2, représentant la pente d'une droite passant par deux points positionnés dans une partie sensiblement linéaire de la deuxième portion. Dans l'exemple représenté, les deux points ont pour ordonnées respectives F = 285 N et F = 385 N, ces valeurs de force de traction correspondant à des niveaux de sollicitations mécaniques représentatifs de ceux qui sont appliqués aux renforts métalliques des couches de sommet, au cours du roulage du pneumatique étudié. Comme décrit précédemment KG2 = MG2*S, donc on peut en déduire le module en extension MG2.

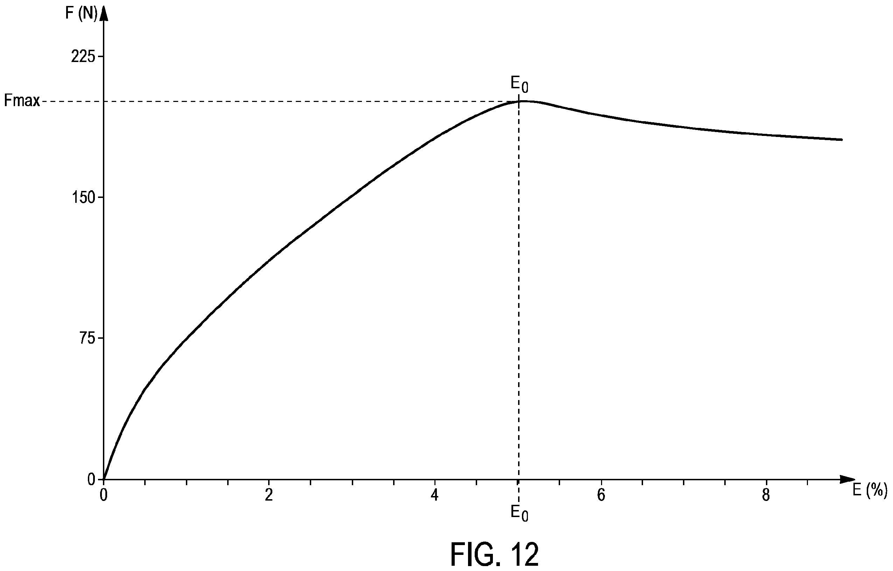

La figure 12 est un exemple-type de courbe force de compression-déformation en compression d'un renfort métallique élastique selon le mode de réalisation particulier de renfort métallique élastique précédemment décrit, représentant son comportement élastique en compression. La force de compression F est exprimée en N et la déformation en compression est un écrasement relatif, exprimé en %. Cette loi de comportement en compression, déterminée sur une éprouvette en mélange élastomérique ayant un module d'élasticité en extension sécant à 10% d'allongement MA10 égal à 6 MPa, présente un maximum correspondant à l'apparition du flambage en compression du renfort. Ce maximum est atteint pour une force de compression maximale Fmax, ou force critique de flambage, correspondant à une déformation critique de flambage E0. Au-delà du point de flambage, la force de compression appliquée diminue alors que la déformation continue à augmenter. Selon ce mode de réalisation, la déformation critique de flambage en compression E0 est environ égale à 5%, donc supérieure à 3%.

L'invention a été mise en oeuvre pour un pneumatique pour véhicule agricole de dimension 600/70 R 30, ayant une largeur de section nominale L égale à 600 mm et comprenant une bande de roulement ayant un taux d'entaillement volumique TEV égal à 50% et une armature de sommet comprenant deux couches de sommet dont les renforts sont des renforts métalliques élastiques de formules E18.23 ou E24.26.

Pour une portion de bande de roulement telle que représentée sur la figure 4, axialement positionnée, par rapport au plan équatorial E du pneumatique, à une distance axiale DE égale à 79 mm, donc inférieure à 0.36*L=216 mm, et ayant une largeur axiale LE égale à 0.08*L=48 mm, le taux d'entaillement volumique local TEVL est égal à 63% et l'élancement circonférentiel H/B de tout élément de sculpture est égal à 0.36, la hauteur radiale moyenne H étant égale à 44 mm et la longueur circonférentielle moyenne B étant égale à 124 mm. Dans ces hypothèses, le produit TEVL*(H/B) est égal à 0.22, donc inférieur à 0.35, conformément à l'invention.

De plus, dans un plan circonférentiel axialement positionné dans la portion de bande de roulement telle que représentée sur la figure 4, en dehors du sillon circonférentiel, le taux d'entaillement circonférentiel TEC1 à l'état neuf est égal à 38% et le taux d'entaillement circonférentiel TEC2 à l'état usé est égal à 17%, donc TEC1 est égal à 2.24 fois TEC2, donc supérieur à 1.45 fois TEC2, conformément à un mode de réalisation préféré de l'invention.

Par rapport à un pneumatique pour véhicule agricole de l'état de la technique avec une bande de roulement à barrettes et une armature de sommet métallique, et fonctionnant à basse pression tel qu'un pneumatique IF (Improved Flexion) ou un pneumatique VF (Very High Flexion), les inventeurs ont constaté une augmentation de l'endurance de l'armature de sommet pour un pneumatique avec une bande de roulement à faible basculement circonférentiel telle que décrite dans l'invention.

## Revendications

1. Pneumatique (1) pour véhicule agricole ayant une largeur de section nominale L, au sens de la norme ETRTO, et comprenant, radialement de l'extérieur vers l'intérieur, une bande de roulement (2) et une armature de sommet (3):
- la bande de roulement (2) comprenant des éléments de sculpture (22), séparés les uns des autres par des creux (23), et s'étendant radialement vers l'extérieur à partir d'une surface portante (24) jusqu'à une surface de roulement (25),
- la bande de roulement (2) ayant un taux d'entaillement volumique TEV, défini comme le ratio entre le volume de creux VC et le volume total de la bande de roulement supposée sans creux V, compris entre la surface portante (24) et la surface de roulement(25),
- chaque élément de sculpture (22) ayant un élancement circonférentiel H/B, H étant la hauteur radiale moyenne entre la surface portante (24) et la surface de roulement (25) et B étant la longueur circonférentielle moyenne de l'élément de sculpture (22),
- toute portion de bande de roulement (21), axialement positionnée, par rapport à un plan équatorial (E) du pneumatique, à une distance axiale DE, ayant une largeur axiale LE et un taux d'entaillement volumique local TEVL, défini comme le rapport entre le volume VCL des creux (23) et le volume total VL de ladite portion de bande de roulement (21), compris entre la surface portante (24) et la surface de roulement (25),
- l'armature de sommet (3) comprenant au moins deux couches de sommet (31, 32), comprenant chacune des renforts métalliques enrobés dans un matériau élastomérique, parallèles entre eux et formant, avec une direction circonférentielle (XX'), un angle au moins égal à 10°,
**caractérisé en ce que,** pour toute portion de bande de roulement (21), axialement positionnée, par rapport au plan équatorial (E) du pneumatique, à une distance axiale DE au plus égale à 0.36*L, et ayant une largeur axiale LE égale à 0.08* L, le produit TEVL*(H/B) du taux d'entaillement volumique local de la portion de bande de roulement (21) par l'élancement circonférentiel H/B de tout élément de sculpture (22) de ladite portion de bande de roulement (21) est au plus égal à 0,35 **et en ce que** la bande de roulement (2) comprend un nombre total N d'éléments de sculpture (22), chaque élément de sculpture (22) comprenant une face de contact (221), une face d'attaque (222) et une face de fuite (223), ladite face d'attaque étant inclinée d'un angle α vers l'arrière par rapport à la direction radiale (ZZ') selon le sens de roulement (R) de la bande de roulement (2), ladite bande de roulement (2) comprenant un nombre N1 d'éléments de sculpture (22) pour lesquels l'angle α est compris entre 50 degrés et 75 degrés, le nombre N1 étant au moins égal à 0,2 x N.

2. Pneumatique (1) selon la revendication 1, **dans lequel** le taux d'entaillement volumique TEV de la bande de roulement (2) est au moins égal à 35%.

3. Pneumatique (1) selon l'une des revendications 1 ou 2, **dans lequel** la hauteur radiale moyenne H de chaque élément de sculpture (22) est au moins égale à 20 mm.

4. Pneumatique (1) selon l'une quelconque des revendications 1 à 3, **dans lequel** la hauteur radiale moyenne H de chaque élément de sculpture (22) est au plus égale à 50 mm.

5. Pneumatique (1) selon l'une quelconque des revendications 1 à 4, ayant, dans un plan circonférentiel (XZ) donné, un taux d'entaillement circonférentiel TEC1 à l'état neuf, mesuré le long de la courbe d'intersection (C1) entre le plan circonférentiel (XZ) et la surface de roulement (25) à l'état neuf, TEC1 étant défini comme le ratio entre la longueur circonférentielle de creux LC1 et la longueur circonférentielle totale L1, et le pneumatique ayant, dans le plan circonférentiel (XZ), un taux d'entaillement circonférentiel TEC2 à l'état usé, mesuré le long de la courbe d'intersection (C2) entre le plan circonférentiel (XZ) et la surface de roulement (26) à l'état usé, la surface de roulement (26) à l'état usé étant radialement positionnée à l'extérieur de la surface portante (24) à une distance radiale HR, hauteur résiduelle de l'élément de sculpture correspondant à l'état usé en fin de vie du pneumatique avant retrait du véhicule, TEC2 étant défini comme le ratio entre la longueur circonférentielle de creux LC2 et la longueur circonférentielle totale L2, **dans lequel,** dans tout plan circonférentiel (XZ) axialement positionné à au plus 0.4*L, le taux d'entaillement circonférentiel TEC1 à l'état neuf est au moins égal à 1.45 fois le taux d'entaillement circonférentiel TEC2 à l'état usé.

6. Pneumatique (1) selon l'une quelconque des revendications 1 à 5, dont la bande de roulement (2) est constituée par au moins 5 rangées circonférentielles (20) d'éléments de sculpture (22) séparées les unes des autres par des creux sensiblement circonférentiels (231) s'étendant sur toute la circonférence du pneumatique, **dans lequel** la bande de roulement (2) comprend des creux transversaux (232) s'étendant continûment d'un bord axial (27) à l'autre de la bande de roulement.

7. Pneumatique (1) selon l'une quelconque des revendications 1 à 5, dont la bande de roulement (2) est constituée par au moins 5 rangées circonférentielles (20) d'éléments de sculpture (22) séparées les unes des autres par des creux sensiblement circonférentiels (231), s'étendant sur toute la circonférence du pneumatique, **dans lequel** la bande de roulement (2) comprend des creux transversaux (232) s'étendant de façon discontinue d'un bord axial (27) à l'autre de la bande de roulement (2), de telle sorte que les éléments de sculpture (22) d'une rangée circonférentielle (20) donnée ont un décalage angulaire selon la direction circonférentielle (XX') par rapport à ceux d'une rangée adjacente.

8. Pneumatique (1) selon l'une quelconque des revendications 1 à 7, **dans lequel** tout renfort métallique de couche de sommet (31, 32) a une loi de comportement élastique en extension, dite bi-module, comprenant une première portion ayant un premier module en extension MG1 au plus égal à 30 GPa, et une deuxième portion ayant un deuxième module en extension MG2 au moins égal à 2 fois le premier module en extension MG1, ladite loi de comportement en extension étant déterminée pour un renfort métallique enrobé dans un mélange élastomérique ayant un module d'élasticité en extension à 10% d'allongement MA10 au moins égal à 5 MPa et au plus égal à 15 MPa, **et dans lequel** tout renfort métallique de couche de sommet (31, 32) a une loi de comportement en compression, **caractérisée par** une déformation critique de flambage en compression E0 au moins égale à 3%, ladite loi de comportement en compression étant déterminée sur une éprouvette constituée par un renfort placé en son centre et enrobé par un volume parallélépipédique de mélange élastomérique ayant un module d'élasticité en extension à 10% d'allongement MA10 au moins égal à 5 MPa et au plus égal à 15 MPa.

## Patentansprüche

1. Reifen (1) für ein landwirtschaftliches Fahrzeug, welcher eine Nennquerschnittsbreite L im Sinne der Norm ETRTO aufweist und radial von außen nach innen einen Laufstreifen (2) und eine Scheitelbewehrung (3) umfasst;
- wobei der Laufstreifen (2) Profilelemente (22) umfasst, die durch Vertiefungen (23) voneinander getrennt sind und sich von einer tragenden Fläche (24) bis zu einer Lauffläche (25) radial nach außen erstrecken,
- wobei der Laufstreifen (2) einen volumenbezogenen Negativprofilanteil TEV aufweist, der als das Verhältnis zwischen dem Volumen der Vertiefungen VC und dem Gesamtvolumen des als keine Vertiefungen aufweisend angenommenen Laufstreifens V, das sich zwischen der tragenden Fläche (24) und der Lauffläche (25) befindet, definiert ist,
- wobei jedes Profilelement (22) einen Schlankheitsgrad in Umfangsrichtung H/B aufweist, wobei H die mittlere radiale Höhe zwischen der tragenden Fläche (24) und der Lauffläche (25) ist und B die mittlere Länge in Umfangsrichtung des Profilelements (22) ist,
- wobei jeder Laufstreifenabschnitt (21), der axial in Bezug auf eine Äquatorialebene (E) des Reifens in einem axialen Abstand DE positioniert ist, eine axiale Breite LE und einen lokalen volumenbezogenen Negativprofilanteil TEVL, der als das Verhältnis zwischen dem Volumen VCL der Vertiefungen (23) und dem Gesamtvolumen VL des Laufstreifenabschnitts (21) zwischen der tragenden Fläche (24) und der Lauffläche (25) definiert ist, aufweist,
- wobei die Scheitelbewehrung (3) mindestens zwei Scheitellagen (31, 32) umfasst, die jeweils in ein Elastomermaterial eingebettete metallische Festigkeitsträger umfassen, die zueinander parallel sind und mit einer Umfangsrichtung (XX') einen Winkel von mindestens 10° bilden,
**dadurch gekennzeichnet, dass** für jeden Laufstreifenabschnitt (21), der axial in Bezug auf die Äquatorialebene (E) des Reifens in einem axialen Abstand DE von höchstens 0,36*L positioniert ist und eine axiale Breite LE von 0,08*L aufweist, das Produkt TEVL*(H/B) des lokalen volumenbezogenen Negativprofilanteils des Laufstreifenabschnitts (21) mit dem Schlankheitsgrad in Umfangsrichtung H/B jedes Profilelements (22) des Laufstreifenabschnitts (21) höchstens gleich 0,35 ist, und dadurch, dass der Laufstreifen (2) eine Gesamtanzahl N von Profilelementen (22) umfasst, wobei jedes Profilelement (22) eine Kontaktfläche (221), eine vordere Fläche (222) und eine hintere Fläche (223) umfasst, wobei die vordere Fläche in Bezug auf die radiale Richtung (ZZ') in der Laufrichtung (R) des Laufstreifens (2) um einen Winkel α nach hinten geneigt ist, wobei der Laufstreifen (2) eine Anzahl N1 von Profilelementen (22) umfasst, für die der Winkel α zwischen 50 Grad und 75 Grad liegt, wobei die Anzahl N1 mindestens gleich 0,2 x N ist.

2. Reifen (1) nach Anspruch 1, wobei der volumenbezogene Negativprofilanteil TEV des Laufstreifens (2) mindestens gleich 35 % ist.

3. Reifen (1) nach einem der Ansprüche 1 oder 2, wobei die mittlere radiale Höhe H jedes Profilelements (22) mindestens gleich 20 mm ist.

4. Reifen (1) nach einem der Ansprüche 1 bis 3, wobei die mittlere radiale Höhe H jedes Profilelements (22) höchstens gleich 50 mm ist.

5. Reifen (1) nach einem der Ansprüche 1 bis 4, der in einer gegebenen Umfangsebene (XZ) einen umfangsbezogenen Negativprofilanteil TEC1 im Neuzustand aufweist, gemessen entlang der Schnittkurve (C1) zwischen der Umfangsebene (XZ) und der Lauffläche (25) im Neuzustand, wobei TEC1 als das Verhältnis zwischen der Länge in Umfangsrichtung der Vertiefungen LC1 und der Gesamtlänge in Umfangsrichtung L1 definiert ist, und wobei der Reifen in der Umfangsebene (XZ) einen umfangsbezogenen Negativprofilanteil TEC2 im abgenutzten Zustand aufweist, gemessen entlang der Schnittkurve (C2) zwischen der Umfangsebene (XZ) und der Lauffläche (26) im abgenutzten Zustand, wobei die Lauffläche (26) im abgenutzten Zustand radial außerhalb der tragenden Fläche (24) in einem radialen Abstand HR positioniert ist, der Resthöhe des Profilelements, die dem abgenutzten Zustand am Ende der Lebensdauer des Reifens vor der Demontage vom Fahrzeug entspricht, wobei TEC2 als das Verhältnis zwischen der Länge in Umfangsrichtung der Vertiefungen LC2 und der Gesamtlänge in Umfangsrichtung L2 definiert ist, wobei in jeder Umfangsebene (XZ), die axial bei höchstens 0,4*L positioniert ist, der umfangsbezogene Negativprofilanteil TEC1 im Neuzustand mindestens gleich dem 1,45-Fachen des umfangsbezogenen Negativprofilanteils TEC2 im abgenutzten Zustand ist.

6. Reifen (1) nach einem der Ansprüche 1 bis 5, dessen Laufstreifen (2) aus mindestens 5 Umfangsreihen (20) von Profilelementen (22) besteht, die durch im Wesentlichen in Umfangsrichtung verlaufende Vertiefungen (231) voneinander getrennt sind, die sich über den gesamten Umfang des Reifens erstrecken, wobei der Laufstreifen (2) quer verlaufende Vertiefungen (232) umfasst, die sich durchgehend von einem axialen Rand (27) des Laufstreifens zu anderen erstrecken.

7. Reifen (1) nach einem der Ansprüche 1 bis 5, dessen Laufstreifen (2) aus mindestens 5 Umfangsreihen (20) von Profilelementen (22) besteht, die durch im Wesentlichen in Umfangsrichtung verlaufende Vertiefungen (231) voneinander getrennt sind, die sich über den gesamten Umfang des Reifens erstrecken, wobei der Laufstreifen (2) quer verlaufende Vertiefungen (232) umfasst, die sich diskontinuierlich von einem axialen Rand (27) des Laufstreifens (2) zum anderen erstrecken, derart, dass die Profilelemente (22) einer gegebenen Umfangsreihe (20) einen Winkelversatz in der Umfangsrichtung (XX') bezüglich derjenigen einer benachbarten Reihe aufweisen.

8. Reifen (1) nach einem der Ansprüche 1 bis 7, wobei jeder metallische Festigkeitsträger einer Scheitellage (31, 32) ein sogenanntes bimodulares Gesetz des elastischen Dehnungsverhaltens aufweist, das einen ersten Teil mit einem ersten Dehnungsmodul MG1 von höchstens 30 GPa und einen zweiten Teil mit einem zweiten Dehnungsmodul MG2 von mindestens dem 2-Fachen des ersten Dehnungsmoduls MG1 aufweist, wobei das Gesetz des Dehnungsverhaltens für einen metallischen Festigkeitsträger bestimmt wird, der in eine Elastomermischung eingebettet ist, die einen Dehnungselastizitätsmodul bei 10 % Dehnung MA10 von mindestens 5 MPa und höchstens 15 MPa aufweist, und wobei jeder metallische Festigkeitsträger einer Scheitellage (31, 32) ein Gesetz des Druckverhaltens aufweist, das durch eine kritische Knickverformung unter Druck E0 gekennzeichnet ist, die mindestens 3 % beträgt, wobei dieses Gesetz des Druckverhaltens an einem Prüfkörper bestimmt wird, der aus einem Festigkeitsträger besteht, der in seiner Mitte angeordnet ist und in eine quaderförmiges Volumen aus Elastomermischung eingebettet ist, die einen Dehnungselastizitätsmodul bei 10 % Dehnung MA10 von mindestens 5 MPa und höchstens 15 MPa aufweist.

## Claims

1. Tyre (1) for an agricultural vehicle, having a nominal section width L, within the meaning of the ETRTO standard, and comprising, radially from the outside to the inside, a tread (2) and a crown reinforcement (3),
- the tread (2) comprising tread pattern elements (22) that are separated from one another by voids (23) and extend radially towards the outside from a bearing surface (24) to a tread surface (25),
- the tread (2) having a volumetric void ratio TEV, defined as the ratio between the volume of voids VC and the total volume of the tread assumed to be free of voids V, comprised between the bearing surface (24) and the tread surface (25),
- each tread pattern element (22) having a circumferential slenderness H/B, H being the mean radial height between the bearing surface (24) and the tread surface (25) and B being the mean circumferential length of the tread pattern element (22),
- each tread portion (21), positioned axially, with respect to an equatorial plane (E) of the tyre, at an axial distance DE, having an axial width LE and a local volumetric void ratio TEVL, defined as being the ratio between the volume VCL of the voids (23) and the total volume VL of said tread portion (21), comprised between the bearing surface (24) and the tread surface (25),
- the crown reinforcement (3) comprising at least two crown layers (31, 32), each comprising metal reinforcers that are coated in an elastomeric material, are mutually parallel and form an angle at least equal to 10° with a circumferential direction (XX'),
**characterized in that,** for each tread portion (21), positioned axially, with respect to the equatorial plane (E) of the tyre, at an axial distance DE at most equal to 0.36*L, and having an axial width LE equal to 0.08*L, the product TEVL*(H/B) of the local volumetric void ratio of the tread portion (21) and the circumferential slenderness H/B of each tread pattern element (22) of said tread portion (21) is at most equal to 0.35 **and in that** the tread (2) comprises a total number N of tread pattern elements (22), each tread pattern element (22) comprising a contact face (221), a leading face (222) and a trailing face (223), said leading face being inclined by an angle A towards the rear with respect to the radial direction (ZZ') in the direction of running (R) of the tread (2), said tread (2) comprising a number N1 of tread pattern elements (22) for which the angle α is comprised between 50 degrees and 75 degrees, the number N1 being at least equal to 0.2xN.

2. Tyre (1) according to Claim 1, **wherein** the volumetric void ratio TEV of the tread (2) is at least equal to 35%.

3. Tyre (1) according to either of Claims 1 or 2, **wherein** the mean radial height H of each tread pattern element (22) is at least equal to 20 mm.

4. Tyre (1) according to any one of Claims 1 to 3, **wherein** the mean radial height H of each tread pattern element (22) is at most equal to 50 mm.

5. Tyre (1) according to any one of Claims 1 to 4, having, in a given circumferential plane (XZ), a circumferential void ratio TEC1 in the new state, measured along the curve (C1) of intersection between the circumferential plane (XZ) and the tread surface (25) in the new state, TEC1 being defined as the ratio between the circumferential void length LC1 and the total circumferential length L1, and the tyre having, in the circumferential plane (XZ), a circumferential void ratio TEC2 in the worn state, measured along the curve (C2) of intersection between the circumferential plane (XZ) and the tread surface (26) in the worn state, the tread surface (26) in the worn state being radially positioned on the outside of the bearing surface (24) at a radial distance HR, residual height of the corresponding tread pattern element in the worn state at the end of life of the tyre before it is removed from the vehicle, TEC2 being defined as the ratio between the circumferential void length LC2 and the total circumferential length L2, **wherein,** in each circumferential plane (XZ) axially positioned at most 0.4*L, the circumferential void ratio TEC1 in the new state is at least equal to 1.45 times the circumferential void ratio TEC2 in the worn state.

6. Tyre (1) according to any one of Claims 1 to 5, in which the tread (2) is made up of at least 5 circumferential rows (20) of tread pattern elements (22) that are separated from one another by substantially circumferential voids (231) extending around the entire circumference of the tyre, **wherein** the tread (2) comprises transverse voids (232) extending continuously from one axial edge (27) of the tread to the other.

7. Tyre (1) according to any one of Claims 1 to 5, in which the tread (2) is made up of at least 5 circumferential rows (20) of tread pattern elements (22) that are separated from one another by substantially circumferential voids (231) extending around the entire circumference of the tyre, **wherein** the tread (2) comprises transverse voids (232) extending discontinuously from one axial edge (27) of the tread (2) to the other, such that the tread pattern elements (22) of a given circumferential row (20) have an angular offset in the circumferential direction (XX') with respect to those of an adjacent row.

8. Tyre (1) according to any one of Claims 1 to 7,**wherein** any metal reinforcer of a crown layer (31, 32) has a law, known as a bi-modulus law, governing its elastic behaviour under tension, and comprising a first portion having a first extension modulus MG1 at most equal to 30 GPa, and a second portion having a second extension modulus MG2 at least equal to 2 times the first extension modulus MG1, said law governing the tensile behaviour being determined for a metal reinforcer coated in an elastomer compound having a tensile elastic modulus at 10% elongation, MA10, at least equal to 5 MPa and at most equal to 15 MPa, **and in that** any metal reinforcer of a crown layer (31, 32) has a law governing its behaviour under compression that is **characterized by** a critical buckling strain E0 at least equal to 3%, said law governing behaviour under compression being determined on a test specimen made up of a reinforcer placed at its centre and coated with a parallelepipedal volume of an elastomer compound having a tensile elastic modulus at 10% elongation, MA10, at least equal to 5 MPa and at most equal to 15 MPa.
